# EUROPEAN PATENT SPECIFICATION

(11) **EP 0 265 948 B1**
(45) Date of publication and mention of the grant of the patent: **08.06.1994**
(21) Application number: 87115910.9
(22) Date of filing: 29.10.1987
(51) Int. Cl.: G06F 9/38, G06F 9/32

(54) **Data processor capable of immediately calculating branch address in relative address branch**
Datenprozessor mit der Fähigkeit, die Verzweigungsadresse sofort zu berechnen in einer Relativadressenverzweigung
Processeur de données capable de calculer immédiatement l'adresse de branchement dans un branchement à adresse relative

(30) Priority: 29.10.1986 JP 258917/86
(43) Date of publication of application: 04.05.1988
(73) Proprietor: NEC CORPORATION, Tokyo (JP)
(72) Inventor: Kimoto, Manabu c/o NEC Corporation, Minato-ku Tokyo (JP)
(74) Representative: Glawe, Delfs, Moll & Partner

(56) References cited:
- US-A- 3 774 166
- US-A- 4 449 185
- IBM TECHNICAL DISCLOSURE BULLETIN, vol. 20, no. 4, September 1977, pages 1284-1285, New York, US; R.A. VRBA: "High speed technique for the implementation of an incremental jump instruction"
- PATENT ABSTRACTS OF JAPAN, vol. 8, no. 101 (P-273)[1538], 12th May 1984, & JP-A-59 11 451 (NIPPON DENKI K.K.) 21-01-1984

## Description

### Background of the Invention

### Field of the Invention

The present invention relates to a stored program type digital computer, and more specifically, to a data processor for use in small sized digital computers such as microcomputers.

### Description of related art

In general, the stored program digital computers have been adapted to fetch necessary instructions and data from an associated memory so as to execute necessary operation. At present, a program counter is widely used as means for designating the address of instructions to be read out of the memory. Namely each time one instruction is executed, the program counter is incremented to designate the address of an instruction to be executed next, so that a sequence of instructions are read in accordance with the address indicated by the program counter. In this method, however, in order to change a flow of sequential operations, a so-called branch instruction is required.

The branch instruction is divided into an absolute address branch instruction and a relative address branch instruction. Most of small scaled microcomputers of an initial stage had been operated with only the absolute address branch instructions. A first reason for this is that the microcomputers of the initial stage can handle only jobs of several kilobytes or less in the amount of programs, and therefore, use of the absolute address branch had not so given a trouble in development of programs. A second reason in that a complicated control for hardware is required in order to execute the relative address branch.

However, appearance of microcomputers, which have a memory space of 64 kilobytes or more, has required as one necessary minimum condition that a program is relocatable in the course of development from the viewpoint of facility of edition and modification of program. For complying with this demand, the branch instruction should be the relative address branch instruction.

Heretofore, the relative address branch instruction has been executed by calculating the branch address by use of an arithmetic and logic unit for data processing, and then by setting the calculated branch address to the program counter.

In general microcomputers, however, the address information for memory access has a bit length larger than that of the data processed in the microcomputer. Therefore, the arithmetic and logic unit cannot calculate the destination address of the relative address branch at only one operation. Therefore, a plurality of operations must be executed. This is one hindrance in a high speed operation of the computer.

Reviewing the relative address branch instructions in actual computer programs from a statistical viewpoint, the branch destination addresses distribute in a limited range near to the current address, and it is a rare case that the branch destination addresses distribute in a wide range accessible by the microcomputer. This means that it is sufficient if the microcomputer has a function of branching to an address contained in a limited range in the case of the relative address branch instruction.

In any case, even if the relative address branch has the feature as mentioned above, a plurality of operations are still required for calculation of the branch destination address. Therefore, in order to speed up the calculation of the branch destination address in the prior art, it was necessary to provide an independent operating unit only for the branch destination address calculation so that the arithmetic and logic unit for data processing is not used for address calculation.

A technique for high speed processing of relative jump instructions is disclosed in IBM technical disclosure bulletin, vol. 20, No. 4, September 1977, pages 1284-1285. In this technique the assembler calculates the lowest four bits of the destination address and inserts them into the instruction instead of the actual displacement, and depending from the jump direction and a comparison of the said lowest four bits of the destination address with the lowest four bits of the programm counter the remaining twelve bits are either incremented or decremented. Increment is conducted by a ordinary 16-bit increment logic, and decrement is conducted by using a 8-bit ALU and an additional four bit decrementer.

Accordingly, it is an object of the present invention to provide a microcomputer which has overcome the above mentioned disadvantage of the conventional ones.

Another object of the present invention is to provide a data processor capable of calculating a branch destination address of a relative address branch at a high speed and with a simple additional circuit.

These objects are achieved by a data processor as defined in claim 1; the dependent claims are related to further developments of the invention.

The above and other objects, features and advantages of the present invention will be apparent from the following description of the preferred embodiment of the invention with reference to the accompanying drawings.

### Brief Description of the Drawings

Figure 1 is a block diagram of one embodiment of the data processor in accordance with the present invention;
Figure 2 is a circuit diagram of the control circuit shown in Figure 1; and
Figure 3 illustrates the structure of the machine language of the relative address branch instruction used in the embodiment shown in Figure 2.

### Description of the Preferred Embodiment

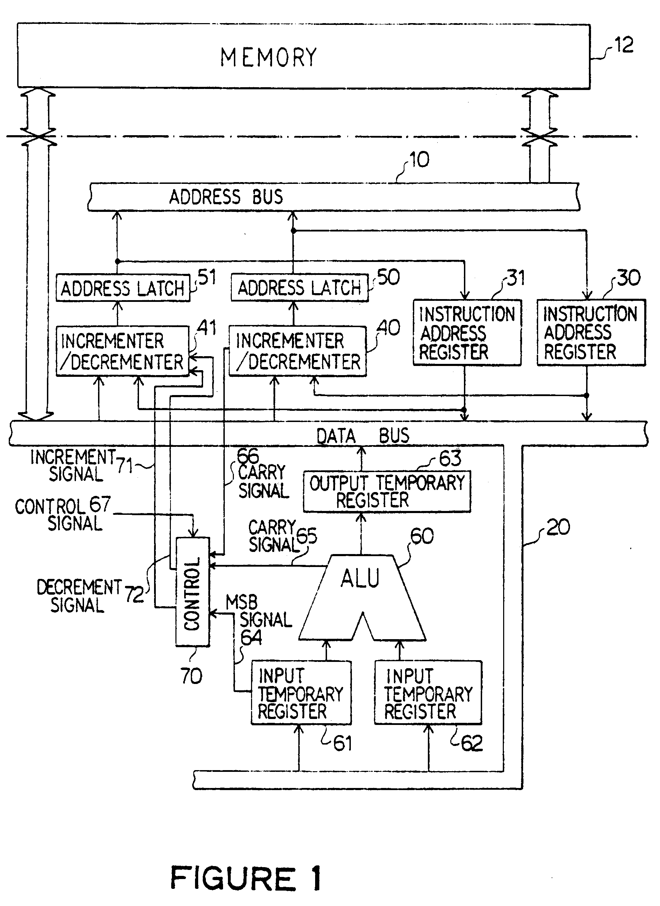

Referring to Figure 1, a data processor in accordance with the present invention comprises an address bus 10 used for transmitting an address information for access to a memory 12 coupled to the address bus 10. In this embodiment, the address bus 10 is of a parallel type having a width of 16 bits. The memory 12 is also coupled to a data bus 20 used for transferring various items of data within the computer. In this embodiment, the data bus 20 is of a parallel type having a width of 8 bits.

A pair of instruction address registers 30 and 31 of 8 bits are coupled at their outputs to the data bus 20. Further, a pair of incrementer/decrementers 40 and 41 of 8 bits are coupled at their one inputs to the data bus 20 and at their other inputs to the outputs of the instruction address registers 30 and 31, respectively. Outputs of the incrementer/decrementers 40 and 41 are coupled to respective inputs of a pair of address latches 50 and 51 of 8 bits, respectively. These address latches 50 and 51 are coupled at their outputs to the less significant 8 bits and the more significant 8 bits of the address bus 10, respectively, and also to inputs of the instruction address registers 30 and 31, respectively.

Furthermore, the shown data processor includes an arithmetic and logic unit (ALU) 60 having a pair of 8-bit inputs coupled to outputs of a pair of input temporary registers 61 and 62 of 8 bits, which are in turn coupled at their inputs to the data bus 20. The ALU 60 has an 8-bit output coupled to an input of an output temporary register 63 of 8 bits, whose output is coupled to the data bus 20.

The most significant bit (MSB) 64 of the temporary register 61 is supplied to a control circuit 70, which also receive a carry signal 65 from the ALU 60, another carry signal 66 from the incrementer/decrementer 40, and a control signal 67 indicative of a relative address branch instruction. The control circuit 70 is adapted to respond to the above four signals to generate an increment signal 71 or a decrement signal 72 to the incrementer/decrementer 41.

Specifically, the instruction address registers 30 and 31 store the address of an instruction stored in the memory 12 and to be read from the memory 12, in such a manner that the register 30 stores less significant 8 bits of the address and the register 31 stores more significant 8 bits of the same address. On the other hand, the input temporary registers 61 and 62 respectively receive through the data but 20 the data to be inputted to the ALU 60, and then, output the temporarily held data to the ALU 60. At the same time, the most significant bit (MSB) signal 64 is supplied to the control circuit 70 from the input temporary register 61. For example, the ALU 60 adds the pair of data supplied from the temporary registers 61 and 62, and outputs a data signal representative of the result of addition through the output temporary register 63 to the data bus 20. Concurrently with this operation of addition, the ALU 60 generates the carry signal 65 to the control circuit 70 if a carry has occurred.

The incrementer/decrementers 40 and 41 respectively receive the data outputted on the data bus 20, and then, output the data to the address latches 50 and 51, respectively. Furthermore, when the increment signal 71 is generated by the control circuit 70, the incrementer/decrementer 41 receiving the more significant half of the data will increment the content of the more significant instruction address register 31 to output an incremented address information to the address latch 51. When the decrement signal 72 is generated by the control circuit 70, the incrementer/decrementer 41 will decrement the content of the register 31 so as to output the decremented address information to the address latch 51. These address latches 50 and 51 respectively latch the inputted address information of 8 bits, and then, output the latched address to the address bus 10 in the form of 16 bits.

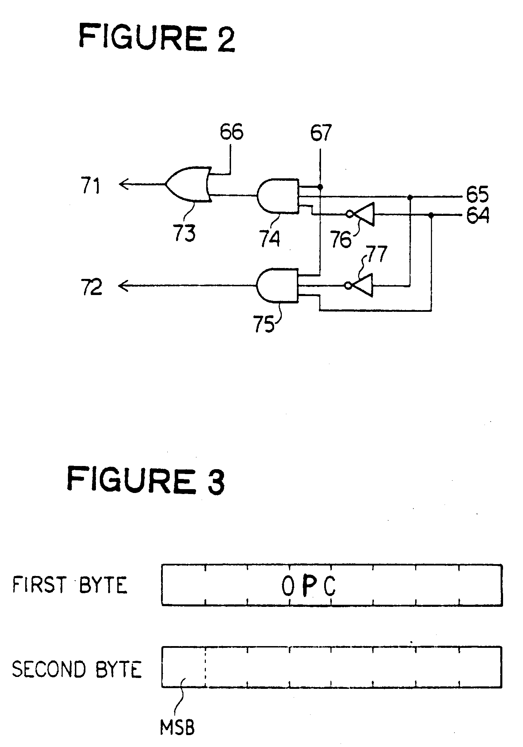

Referring to Figure 2, there is shown a circuit diagram of the control circuit 70. The shown control circuit 70 includes a three-input AND circuit 74 connected to receive at its first input the control signal 67 indicative of the relative address branch instruction, at its second input the carry signal 65 outputted from the ALU 60 and at its third input through an inverter 76 the MSB signal 64 supplied from the input temporary register 61. An output of the AND circuit 74 is connected to one input of an OR circuit 73, whose other input is connected to receive the carry signal 66 outputted from the incrementer/decrementer 40. The OR circuit 73 generates the increment signal 71 which is supplied to the incrementer/decrementer 41. The control circuit 70 also includes another three-input AND circuit 75 receiving the control signal 67 and the MSB signal 64 and also the carry signal 65 through another inverter 77. This AND circuit 75 generates the decrement signal 72 to the incrementer/decrementer 41.

Turning to Figure 3, there is shown one example of a machine language of the relative address branch instruction. The branch instruction includes two bytes, a first byte of which is composed of an operation code (OPC). The second byte indicates a branch relative address, which is divided into a most significant bit (MSB) and other seven bits and defined as follows: When the MSB is of "0", it is instructed to branch to the address obtained by adding the current address with the lower seven bits of the second byte. When the MSB is of "1", it is instructed to branch to the address obtained by adding the data in a complement form of the lower seven bits of the second byte to the current address (i.e., by subtracting the data of the lower seven bits of the second byte from the current address). This operation for the branch instruction is executed under control of a sequence controller (not shown) as the result of the decoding of the operation code included in the first byte.

Now, operation will be explained. When the relative address branch instruction is detected, the control signal 67 is brought into a high level "1". Further, the data of the second byte of the relative address branch instruction as shown in Figure 3 is stored in the input temporary register 61, and the less significant byte of the instruction address contained in the instruction address register 30 is stored through the data bus 20 to the input temporary register 62. The pair of data stored in the temporary register 61 and 62 are supplied to the ALU 60 where the pair of data are added. The result of addition is outputted to and held in the output temporary register 63, and then, transferred through the data bus 20 to the less significant incrementer/decrementer 40. At this time, the incrementer/decrementer 40 carries out neither the increment operation nor the decrement operation, so that the result of addition is inputted to the address latch 50 as it is. Concurrently with this operation, the control circuit 70 receiving the signals 64 and 65 will generate the increment signal 71 or the decrement signal 72 to the more significant incrementer/decrementer 41. Specifically, if the MSB signal 64 of the input temporary register 61 is of "0", when the carry signal 65 is generated by the ALU 60, the increment signal 71 is generated since the control signal 67 is at a high level "1". On the other hand, if the MSB signal 64 of the input temporary register 61 is of "1", when the carry signal 65 is not generated by the ALU 60, the decrement signal 72 is generated.

If the increment signal 71 is inputted to the more significant incrementer/decrementer 41, the content of the more significant instruction address register 31 is incremented by the more significant incrementer/decrementer 41, so that the incremented data is outputted to the address latch 51. On the other hand, when the decrement signal 72 is inputted to the more significant incrementer/decrementer 41, the content of the more significant instruction address register 31 is decremented by the incrementer/decrementer 41, and the decremented data is outputted to the address latch 51.

In the other cases than the two cases mentioned above, since the result of the address calculation executed by the ALU 60 for the lower 8 bits of the address does not influence the upper 8 bits of the address, neither the increment signal 71 nor the decrement signal 72 is generated. Namely, the content of the more significant instruction address register 31 is inputted to the address latch 51 without modification.

Thus, when the MSB signal 64 is of "0", the branch destination absolute address of 16 bits is obtained by adding the total 16-bit content of the instruction address registers 30 and 31 with the lower 7 bits of the second byte of the relative address branch instruction, and then latched in the address latches 50 and 51 in a divided form. The address of 16 bits in total latched in the address latches 50 and 51 is outputted to the address but 10 and hence to the memory 12. In addition, if the MSB signal 64 is of "1", the branch destination absolute address of 16 bits is calculated by subtracting the lower 7 bits of the second byte of the relative address branch instruction from the 16 bit content of the instruction address registers 30 and 31, and then, is latched in the address latches 50 and 51 so that it is transferred to the address bus 10.

When the control signal 67 is at a lower level "0" representative of non-branch operation, the AND gates 74 and 75 are closed so that neither the increment signal nor the decrement signal is generated by the AND gates 74 and 75. In this case, each time one operation is executed by the ALU 60, the less significant incrementer/decrementer 40 increments the content of the less significant instruction address register 30 and outputs the incremented data to the address latch 50. As the result of the increment, if the carry signal 66 is generated by the less significant incrementer/decrementer 40, the carry signal 66 is supplied through the OR circuit 73 as the increment signal 71 to the more significant incrementer/decrementer 41. At this time, this incrementer/decrementer 41 increments the content of the more significant instruction address register 31 and outputs the incremented data to the address latch 51. Unless the increment signal 71 is inputted, the incrementer/decrementer 41 supplies the content of the register 31 to the address latch 51 without modification. Accordingly, the circuits 30, 31, 40, 41, 50 and 51 function as a program counter of 16 bits in a normal sequential program operation.

## Claims

1. A data processor in which a memory access address information has a bit length larger than that of data processed in the processor, which comprises an address bus (10), a data bus (20), first and second instruction address registers (31, 30) coupled to the address bus (10) and the data bus (20) and used for respectively storing a more significant portion and a less significant portion of the address of an instruction to be read, an arithmetic and logic unit (60) coupled to the data bus (20) and capable of executing a calculation on the basis of the content of the second instruction address register (30) and the offset contained in a relative address branch instruction, a control circuit (70) coupled to the arithmetic and logic unit so as to generate an increment signal (71) or a decrement signal (72) on the basis of the result of the calculation by the arithmetic and logic unit, an incrementer/decrementer (41) coupled through the data bus to the first instruction address register (31) and controlled by the increment signal (71) and the decrement signal (72) so as to increment the content of the first instruction address register (31) when the increment signal is received and to decrement the content of the first instruction address (31) register when the decrement signal is received.

2. A data processor as claimed in claim 1, further comprising a memory (12) coupled to the address bus so that a necessary information can be read from a location indicated by the address transmitted through the address bus.

3. A data processor as claimed in claims 1 or 2, characterized in that the data bus (20) and each of the first and second instruction address registers (30, 31) are of N bits.

4. A data processor as claimed in Claim 3 further comprising a second incrementer/decrementer (40) coupled to the second instruction address register (30), wherein the first and second incrementer/decrementers (41, 40) are coupled at their outputs to first and second address latches (51, 50) of N bits, which are in turn coupled at their outputs to the more significant N bits and the less significant N bits of the address bus (10), respectively, and also coupled to the first and second instruction address registers (31, 30), respectively.

5. A data processor as claimed in Claim 3 wherein the arithmetic and logic unit (60) has a first N-bit input coupled through a first input temporary register (61) to the data bus so as to receive a N-bit portion of the relative address branch instruction including the offset, and a second N-bit input coupled through a second input temporary register (62) to the data bus so as to receive the content of the second instruction address register (30).

6. A data processor as claimed in Claim 5 wherein the N-bit portion held in the first input temporary register (61) includes the most significant bit (MSB) indicative of whether addition or substraction should be executed to obtain the branch destination address from the relative branch address, and the other (N-1) bits representative of the relative branch address, and the control circuit (70) receives a carry signal (65) generated by the arithmetic and logic unit (60) and the most significant bit signal (64) of the first input temporary register, the control circuit operating to selectively generate the increment signal (71) or the decrement signal (72) in response to a logical combination of the two input signals.

7. A data processor as claimed in Claim 6 wherein the control circuit (70) includes a first AND circuit (74) receiving at its first input the carry signal (65) from the arithmetic and logic unit (60) and at its second input through an inverter (76) the most significant bit signal (64) of the first input temporary register (61) for the purpose of generating the increment signal (71), and a second AND circuit (75) receiving at its first input through another inverter (77) the carry signal (65) from the arithmetic and logic unit (60) and at its second input the most significant bit signal (64) of the first input temporary register (61) for the purpose of generating the decrement signal (72).

8. A data processor as claimed in claim 7, wherein each of the first and second AND circuits (74, 75) has a third input receiving a control signal (67) indicative of the relative address branch instruction.

9. A data processor as claimed in claim 3, wherein the arithmetic and logic unit (60) is capable of adding the content of the second instruction address register (30) and the offset contained in a relative address branch instruction so as to output the result of addition to the address bus (10) as the lower N bits of the branch destination address and wherein the incrementer/decrementer (41) outputs the incremented/decremented data to the address bus as the higher N bits of the branch destination address.

## Patentansprüche

1. Datenprozessor, bei dem eine Speicherzugriffs-Adressinformation eine größere Bitlänge als die im Prozessor verarbeiteten Daten aufweist, mit einem Adressbus (10), einem Datenbus (20), einem ersten und einem zweiten Befehlsadressregister (31, 30), die mit dem Adressbus (10) und dem Datenbus (20) verbunden sind und für das jeweilige Speichern eines höherwertigen Teils und eines niederwertigen Teils der Adresse eines zu lesenden Befehls verwendet werden, einer arithmetischen und logischen Einheit (60) die mit dem Datenbus (20) verbunden ist und eine Berechnung aufgrund des Inhaltes des zweiten Befehlsadressregisters und eines Offset, der in einem Relativadress-Verzweigungsbefehl enthalten ist, durchführen kann, einer Steuerschaltung (70), die mit der arithmetischen und logischen Einheit derart verbunden ist, um ein Inkrementierungssignal (71) oder ein Dekrementierungssignal (72) aufgrund des Ergebnisses der Berechnung durch die arithmetische und logische Einheit zu erzeugen, einem Inkrementer/Dekrementer (41), der über den Datenbus mit dem ersten Befehlsadressregister (31) verbunden ist und durch das Inkrementsignal (71) und das Dekrementsignal (72) derart gesteuert wird, daß der Inhalt des ersten Befehlsadressregisters (31) erhöht wird, wenn das Inkrementsignal empfangen wird, und der Inhalt des ersten Befehlsadressregisters (31) vermindert wird, wenn das Dekrementsignal empfangen wird.

2. Datenprozessor nach Anspruch 1,
mit ferner einem Speicher (12), der mit dem Adressbus gekoppelt ist, so daß erforderliche Informationen von einer Position, die durch die über den Adressbus übertragene Adresse angegeben wird, ausgelesen werden kann.

3. Datenprozessor nach Anspruch 1 oder 2,
dadurch **gekennzeichnet,** daß der Datenbus (20) und jedes der ersten und zweiten Befehlsadressregister (30, 31) N Bits aufweist.

4. Datenprozessor nach Anspruch 3,
mit ferner einem zweiten Inkrementer/Dekrementer (40), der mit dem zweiten Befehlsadressregister (30) verbunden ist, wobei der erste und der zweite Inkrementer/Dekrementer (41, 40) mit ihren Ausgängen mit einer ersten und einer zweiten Adresshalteeinrichtungen (51, 50) mit N Bits verbunden ist, die ihrerseits mit ihren Ausgängen mit den höherwertigen N Bits und den niedrigerwertigen N Bits des Adressbusses (10) verbunden sind und die ferner mit dem ersten bzw. dem zweiten Befehlsadressregister (31, 30) verbunden sind.

5. Datenprozessor nach Anspruch 3,
wobei die arithmetische und logische Einheit (60) einen ersten Eingang mit N Bit aufweist, der über ein erstes Temporär-Eingangsregister (60) mit dem Datenbus verbunden ist, so daß er einen N Bit-Teil des Relativadressen-Verzweigungsbefehls erhält, einschließlich des Offsets, und einen N Bit-Eingang, der über ein zweites Temporär-Eingangsregister (62) mit dem Datenbus verbunden ist, so daß er den Inhalt des zweiten Befehlsadressenregisters (30) erhält.

6. Datenprozessor nach Anspruch 5,
wobei der N Bit-Teil, der im ersten Temporär-Eingangsregister (61) gehalten wird, das höchstwertige Bit (MSB) umfaßt, das angibt, ob eine Addition oder eine Subtraktion durchgeführt werden soll, um die Verzweigungsbestimmungsadresse aus der Relativ-Verzweigungsadresse zu erhalten, und die anderen (N-1) Bit die relative Verzweigungsadress angeben, und wobei die Steuerschaltung (70) ein Übertragssignal (65) erhält, das durch die arithmetische und logische Einheit (60) erzeugt wird, und das Signal (64) mit dem höchstwertigen Bit des ersten Temporär-Eingangsregisters, wobei die Steuerschaltung selektiv das Inkrementsignal (71) oder das Dekrementsignal (72) in Abhängigkeit von einer Logikkombination der beiden Eingangssignale erzeugt.

7. Datenprozessor nach Anspruch 6,
wobei die Steuerschaltung (70) eine erste UND-Schaltung (74) aufweist, die an ihrem ersten Eingang ein Übertragssignal (65) von der arithmetischen und logischen Schaltung (60) erhält und an ihrem zweiten Eingang über einen Inverter (76) das Signal (64) des höchstwertigen Bits des ersten Temporär-Eingangsregisters (61) erhält zur Erzeugung des Inkrementsignals (71), und eine zweite UND-Schaltung (75), die an ihrem ersten Eingang über einen weiteren Inverter (77) das Übertragssignal (65) von der arithmetischen und logischen Einheit (60) und an ihrem zweiten Eingang das Signal (64) des höchstwertigen Bits des ersten Temporär-Eingangsregisters (61) erhält zum Zweck der Erzeugung des Dekrementsignals (72).

8. Datenprozessor nach Anspruch 7,
wobei jede der ersten und zweiten UND-Schaltungen (74, 75) einen dritten Eingang aufweist, der ein Steuersignal (67) erhält, das den Relativadressen-Verzweigungsbefehl angibt.

9. Datenprozessor nach Anspruch 3,
wobei die arithmetische und logische Einheit (60) den Inhalt des zweiten Befehlsadressregisters (30) und den Offset, der in einem Relativadressen-Verzweigungsbefehl enthalten ist, addieren kann, so daß das Additionsresultat an den Adressbus (10) als die niedrigeren N Bits der Verzweigungs-Bestimmungsadresse ausgegeben wird, und wobei der Inkrementer/Dekrementer (41) das inkrementierte/dekrementierte Signal an den Adressbus als die höheren N Bits der Verzweigungs-Bestimmungsadresse ausgibt.

## Revendications

1. Processeur de données dans lequel une information d'adresse d'accès à la mémoire présente une largeur de bit supérieure à celle des données traitées dans le processeur, qui comprend un bus d'adresses (10), un bus de données (20), des premier et second registres d'adresse d'instruction (31, 30) couplés au bus d'adresses (10) et au bus de données (20) et utilisés pour mémoriser respectivement une partie de poids fort et une partie de poids faible de l'adresse d'instruction qui doit être extraite, une unité arithmétique et logique (60) couplée au bus de données (20) et pouvant exécuter un calcul sur la base du contenu du second registre d'adresse d'instruction (30) et du déplacement contenu dans une instruction de branchement d'adresse relative, un circuit de commande (70) couplé à l'unité arithmétique et logique de façon à produire un signal d'incrémentation (71) ou un signal de décrémentation (72) sur la base du résultat du calcul par l'unité arithmétique et logique, à un incrémenteur/décrémenteur (41) couplé par l'intermédiaire du bus de données au premier registre d'adresse d'instruction (31) et commandé par le signal d'incrémentation (71) et par le signal de décrémentation (72) de façon à incrémenter le contenu du premier registre d'adresse d'instruction (31) lorsque le signal d'incrémentation est reçu et de façon à décrémenter le contenu du premier registre d'adresse d'instruction (31) lorsque le signal de décrémentation est reçu.

2. Processeur de données selon la revendication 1, comprenant de plus une mémoire (12) couplée au bus d'adresses de sorte qu'une information nécessaire puisse être extraite d'un emplacement indiqué par l'adresse transmise par l'intermédiaire du bus d'adresses.

3. Processeur de données selon la revendication 1 ou 2, caractérisé en ce que le bus de données (20) et chacun des premier et second registres d'adresse d'instruction (30, 31) sont de N bits.

4. Processeur de données selon la revendication 3, comprenant de plus un second incrémenteur/décrémenteur (40) couplé au second registre d'adresse d'instruction (30) dans lequel les premier et second incrémenteurs/décrémenteurs (41, 40) sont couplés à leurs sorties à des première et seconde bascules d'adresse (51, 50) de N bits, qui sont à leur tour couplées à leurs sorties aux N bits de poids fort et aux N bits de poids faible du bus d'adresses (10), respectivement et également couplées aux premier et second registres d'adresse d'instruction (31, 30), respectivement.

5. Processeur de données selon la revendication 3, dans lequel l'unité arithmétique et logique (60) présente une première entrée à N bits couplée par l'intermédiaire d'un premier registre temporaire d'entrée (61) au bus de données de façon à recevoir une partie à N bits de l'instruction de branchement d'adresse relative comportant le déplacement et une seconde entrée à N bits couplée par l'intermédiaire d'un second registre temporaire d'entrée (62) au bus de données de façon à recevoir le contenu du second registre d'adresse d'instruction (30).

6. Processeur de données selon la revendication 5, dans lequel la partie à N bits contenue dans le premier registre temporaire d'entrée (61) comporte le bit de poids fort (MSB) représentatif du fait qu'une addition ou une soustraction devra être exécutée afin d'obtenir l'adresse de destination de branchement à partir de l'adresse de branchement relative et les autres (N-1) bits représentatifs de l'adresse de branchement relative et le circuit de commande (70) reçoit un signal de report (65) produit par l'unité arithmétique et logique (60) et le signal de bit de poids fort (64) du premier registre temporaire d'entrée, le circuit de commande agissant pour produire sélectivement le signal d'incrémentation (71) ou le signal de décrémentation (72) en réponse à la combinaison logique des deux signaux d'entrée.

7. Processeur de données selon la revendication 6, dans lequel le circuit de commande (70) comporte un premier circuit ET (74) recevant sur sa première entrée le signal de report (65) à partir de l'unité arithmétique et logique (60) et sur sa seconde entrée par l'intermédiaire d'un inverseur (76) le signal de bit de poids fort (64) du premier registre temporaire d'entrée (61) dans le but de produire le signal d'incrémentation (71) et une seconde porte ET (75) recevant sur sa première entrée par l'intermédiaire d'un autre inverseur (77) le signal de report (65) à partir de l'unité arithmétique et logique (60) et sur sa seconde entrée le signal de bit de poids fort (64) du premier registre temporaire d'entrée (61) dans le but de produire le signal de décrémentation (72).

8. Processeur de données selon la revendication 7, dans lequel chacun des premier et second circuits ET (74, 75) comporte une troisième entrée recevant un signal de commande (67) indicatif de l'instruction de branchement d'adresse relative.

9. Processeur de données selon la revendication 3, dans lequel l'unité arithmétique et logique (60) peut additionner le contenu du second registre d'adresse d'instruction (30) et du déplacement contenu dans une instruction de branchement d'adresse relative de façon à sortir le résultat de l'addition vers le bus d'adresses (10) comme les N bits de poids faible de l'adresse de destination de branchement et dans lequel l'incrémenteur/décrémenteur (41) sort les données incrémentées/décrémentées vers le bus d'adresses comme les N bits de poids fort de l'adresse de destination de branchement.
